## Europäisches Patentamt

## European Patent Office

## Office européen des brevets

(19)

(11) Veröffentlichungsnummer: **0 212 222**
**B1**

(12) **EUROPÄISCHE PATENTSCHRIFT**

(45) Veröffentlichungstag der Patentschrifft:
21.03.90

(21) Anmeldenummer: 86109531.3

(22) Anmeldetag: 11.07.86

(51) Int. Cl.⁵: **B 01 J 49/00, B 01 J 47/02**

(54) Ionenaustauschvorrichtung.

(30) Priorität: 10.08.85 DE 3528800

(43) Veröffentlichungstag der Anmeldung:
04.03.87 Patentblatt 87/10

(45) Bekanntmachung des Hinweises auf die Patenterteilung:
21.03.90 Patentblatt 90/12

(84) Bennante Vertragsstaaten:
AT BE CH FR GB IT LI NL

(56) Entgegenhaltungen:
DE-A-2 555 131
DE-A-3 402 912
US-A-4 299 698

(73) Patentinhaber: Eumann, Hanns-Heinz
Lerchenweg 1
D-7034 Gärtringen (DE)

(72) Erfinder: Eumann, Hanns-Heinz
Lerchenweg 1
D-7034 Gärtringen (DE)

(74) Vertreter: Schiering, Hans, Dipl.-Ing.
Westerwaldweg 4
D-7030 Böblingen (DE)

LIBERGRAF, STOCKHOLM 1990

## Beschreibung

Die Erfindung betrifft eine Ionenaustauschvorrichtung bei der in einem aufgerichteten länglichen Tank auf einem über einem unteren Flüssigkeitsanschluß befindlichen Düsenboden körniges Austauschermaterial bis zu einem Niveau oberhalb einer horizontalen Dränage für die Regeneriermittellösung einer Aufwärtsgegenstromregenerierung und erheblich unterhalb eines oberen Flüssigkeitsanschlusses aufgeschüttet ist und an einer Pumpe oder einem Ventil in der Zuleitung für die Regeneriermittellösung eine Schaltautomatik zum alternativen Zuleiten oder Nichtzuleiten der Regeneriermittellösung mit einem die Regenerierphase in Strömungsabschnitte und Stillstandsabschnitte unterteilenden Taktgeber vorgesehen ist.

Ohne einen die Regenerierphase in Strömungsabschnitte und Stillstandsabschnitte unterteilenden Taktgeber in der Schaltautomatik ist eine solche Ionenaustauschvorrichtung aus DE-A-2 555 131 bekannt. Um den Regeneriermittelbedarf herabzusetzen, den Strömungswiderstand zu stabilisieren und die Austauscherleistung zu verbessern, ist bei dieser Ionenaustauschvorrichtung ein kleinerer Teil des Austauschermaterials gepreßt zwischen dem Düsenboden und einem darüber angeordneten Düsenzwischenboden eingeschlossen, wobei das Volumensverhältnis von eingeschlossenem Teil und nicht eingeschlossenem Austauschermaterial vorzugsweise bei 1 : 3,5 liegt. Mit Hilfe des Düsenzwischenbodens wird gewährleistet, daß die Regeneriermittellösung in einer unteren Sicherheitszone aus unbeladenem Austauschermaterial überhaupt nicht beansprucht wird, anschließend an teilweise beladenem Austauschermaterial eine hohe Regenerierwirkung hat und letztlich in der obersten Austauschermaterialzone bei knapper Bemessung noch eine gute Ausnutzung an hochgradig erschöpftem Austauschermaterial erfährt. Ohne die Pressung würden beim Regenerieren emporgewirbelte unbeladene Austauschermaterialkörner die Ausnutzung der Regeneriermittellösung verschlechtern und hinuntergewirbelte erschöpfte Austauschermaterialkörner die Sicherheitszone verschlechtern. Nach wie vor findet aber eine Verwirbelung des über dem Düsenzwischenboden befindlichen Austauschermaterials statt. Einer Erhöhung der Konzentration der Regeneriermittellösung steht entgegen, daß die Strömungsgeschwindigkeit beim Regenerieren nicht unter einen Grenzwert abgesenkt werden kann. In der Schaltautomatik der Ionenaustauschvorrichtung ist insbesondere der Übergang von der Beladephase auf die Regenerierphase festgelegt. Als Signalgeber dient dabei eine knapp über dem Düsenzwischenboden in den Tank hineinragende Meßsonde, die das Ansteigen der elektrischen Leitfähigkeit der behandelten Flüssigkeit bei beginnender Erschöpfung des angrenzenden Austauschermaterials registriert.

Aus der DE-B-1 442 389 ist bereits eine Ionenaustauschvorrichtung der eingangs angeführten Art bekannt. Sie ist darauf ausgelegt, daß das Austauscherharz von der Regenerierflüssigkeit gleichmäßig ohne Bildung von Durchtrittskanälen durchsetzt wird und daß ohne Regenerierflüssigkeitsüberschuß gearbeitet werden kann. Dabei wird nach beendeter Regenerierung die Flüssigkeit im Harzbett durch pulsierende Beaufschlagung mit einer neuen Menge Regenerierflüssigkeit verdrängt, danach die Verdrängerflüssigkeit unterhalb der freien Harzoberfläche abgezogen und das Harzbett in üblicher Weise gespült. Zur Herstellung der Regenerierflüssigkeit wird aus einem vorhergehenden Regeneriervorgang stammende 2,7 %-ige Chlorwasserstoffsäure durch Auffüllen auf eine Konzentration von 5 % gebracht.

Aus "Ullmanns Encyklopädie der technischen Chemie", Band 8, 1957, Seite 830 ist es bekannt, daß bei der Regenerierung eines beladenen Ionenaustauschers außer der Art des Regeneriermittels dessen spezifische Menge und dessen Konzentration eine Rolle spielen.

Das Dokument US-A-4 299 698 beschreibt eine Wasserenthärtungsapparatur, bei der eine im Gleichstrom nach unten erfolgende Regenerierung eines Ionenaustauschharzbetts mittels einer auf ausgewählte Uhrzeitabschnitte einstellbaren Steuerung aufschiebbar ist, so daß die Wassernutzung nicht in den Zeitperioden des Wasserbedarfs unterbrochen wird.

Das Dokument DE-A-3 402 912 beschreibt eine Vorrichtung zum Regenerieren von Ionenaustauschern in Patronen, die Teile zum Festhalten und Anschließen der zu regenerierenden Ionenaustauscherpatronen in gesonderten Kreisläufen aufweist, ferner eine zentrale Pumpe sowie eine programmierbare elektronische Steuerung, welche den Ablauf des Regenerierprogrammes steuert und die Dauer dieser Programmphasen bestimmt.

Der Erfindung liegt die Aufgabe zugrunde, eine im Aufwärtsgegenstrom regenerierte Ionenaustauschvorrichtung zu schaffen, deren Regeneriermittelbedarf herabgesetzt ist, deren Strömungswiderstand sich wenig ändert und deren Austauscherleistung verbessert ist.

Diese Aufgabe wird erfindungsgemäß bei einer Ionenaustauschvorrichtung der eingangs angeführten Art dadurch gelöst, daß die Konzentration der Regeneriermittellösung auf einen Wert erhöht ist, der bei Nichtanwendung des Taktgebers zu einer schlechten Ausnutzung einer vorgegebenen Regeneriermittelmenge führen würde, daß oberhalb der Dränage eine von der Regenerierung ausgeschlossene mehr als 10 cm hohe Zusatzschicht an Austauschermaterial, die weniger als ein Viertel des gesamten Austauschermaterials enthält, aufgeschüttet ist und daß unterhalb der Dränage eine sich an die Zusatzschicht anschließende und mit dieser durch eine Mischeinrichtung, die an der unteren Grenze der Zwischenschicht angeordnete Rückspüldüsen aufweist, vermischbar eingerichtete Zwischenschicht, die etwa gleich viel Austauschermaterial als die Zusatzschicht enthält, gebildet ist.

Hiermit wird gezielt extrem erschöpftes Austauschermaterial gewonnen und in die letzte Wegstrecke der Regeneriermittellösung vor der Dränage verlegt, so daß aus der dort bereits stark verbrauchten Regeneriermittellösung gleichsam das Letzte an Regenerierkraft herausgeholt wird. Insgesamt wird der Regeneriermittelbedarf um fünfzehn bis zwanzig Prozent herabgesetzt. Etwa zwei Drittel dieser Verbesserung sind der Konzentrationserhöhung in Verbindung mit dem Taktgeber zuzuschreiben. Die Zusatzschicht erbringt nebenbei noch den Vorteil einer besseren Flüssigkeitsverteilung, zumal ihr von der Regenerierung ausgeschlossenes Austauschermaterial ein entsprechend höheres Gewicht erhält und somit einen stärkeren Druck auf das darunter befindliche Austauschermaterial ausübt.

Die Reduzierung des Regeneriermittelbedarfs beruht zum Teil darauf, daß einerseits die Endkonzentration der Regeneriermittellösung festliegt, bis zu der die Regenerierreaktion dominiert, und die Anfangskonzentration der Regeneriermittellösung beträchtlich erhöht ist und andererseits ein unter der Reaktionszeit des körnigen Austauschermaterials liegender zu schneller Durchlauf der infolge der höheren Konzentration verminderten Menge an Regeneriermittellösung durch den Taktgeber vermieden wird. Außerdem wird durch den Taktgeber die Verwirbelung des Austauschermaterials beim Regenerieren mit dem Effekt einer weiteren Reduzierung des Regeneriermittelbedarfs eingeschränkt, ohne das Zurückdrängen von Schmutzteilchen an das oberste Niveau des Austauschermaterials im Endergebnis zu verschlechtern. Aufgrund der schonenderen Behandlung des körnigen Austauschermaterials entsteht weniger Abrieb, was unter anderem für die Kleinhaltung und Konstanthaltung des Strömungswiderstandes der Ionenaustauschvorrichtung vorteilhaft ist. Der Taktgeber führt ferner zu einer besseren Auflockerung des Austauschermaterials, was den Strömungswiderstand weiter vermindert, und zu einer besseren Unterbindung des Entstehens bevorzugter Strömungspfade, was die Austauscherleistung weiter erhöht.

Ein aufgrund der in den Unteransprüchen angegebenen Erfindungsausgestaltungen bevorzugtes Ausführungsbeispiel der Erfindung ist in der teilweise schematischen Zeichnung dargestellt und wird im folgenden näher beschrieben. Es zeigt

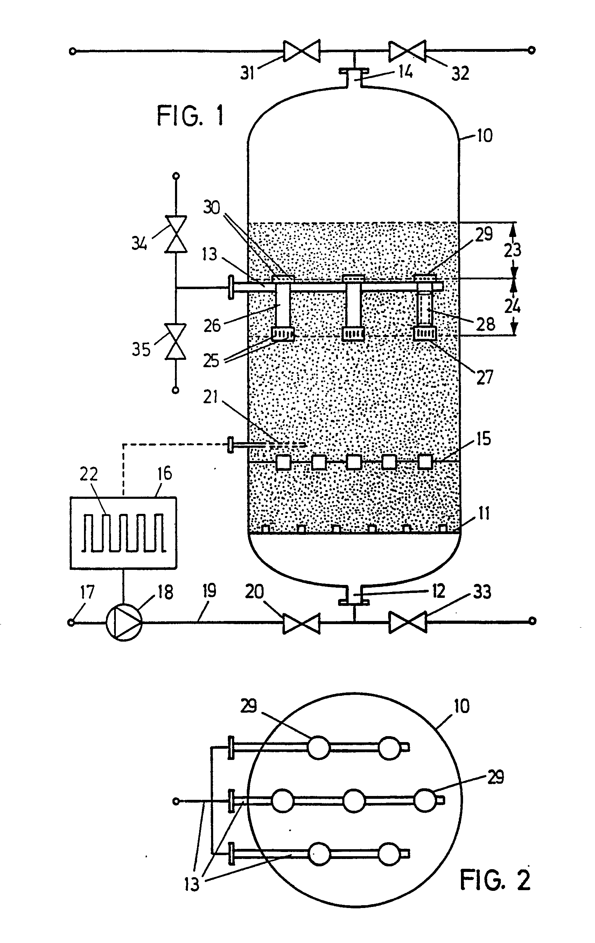

Fig. 1    eine Gesamtdarstellung der beschriebenen Ionenaustauschvorrichtung mit einem Vertikalschnitt ihres Tanks und

Fig. 2    die Draufsicht auf die horizontale Dränage im Tank der Ionenaustauschvorrichtung in Fig. 1.

In dem aufgerichteten länglichen Tank 10 der Ionenaustauschvorrichtung ist auf dem Düsenboden 11, der sich über dem unteren Flüssigkeitsanschluß 12 befindet, körniges Austauschermaterial bis zu einem Niveau oberhalb der horizontalen Dränage 13 und erheblich unterhalb des oberen Flüssigkeitsanschlusses 14 aufgeschüttet. Der in die Zeichnung aufgenommene Düsenzwischenboden 15, dessen Vorteile eingangs behandelt worden sind, sollte in diesem Zusammenhang nicht irritieren. Er kann vorgesehen sein, muß aber nicht vorgesehen sein.

Die Schaltautomatik 16 zum alternativen Zuleiten oder Nichtzuleiten der Regeneriermittellösung 17 ist an der Pumpe 18 in der Zuleitung 19 für die Regeneriermittellösung 17 angebracht. Sie könnte aber auch an dem Einlaßventil 20 in der Zuleitung 19 für die Regeneriermittellösung 17 angeschlossen sein. Die Schaltautomatik 16 ist primär für das Wechselspiel von Beladephase und Regenerierphase der Ionenaustauschvorrichtung vorgesehen. Als Signalgeber dient dabei die knapp über dem Düsenzwischenboden 15 in den Tank 10 hineinragende Meßsonde 21, die das Ansteigen der elektrischen Leitfähigkeit der behandelten Flüssigkeit bei beginnender Erschöpfung des angrenzenden Austauschermaterials registriert.

Durch den in sie eingefügten Taktgeber 22, der die Regenerierphase in Strömungsabschnitte und Stillstandsabschnitte unterteilt, erhält die Schaltautomatik 16 eine zusätzliche Funktion. Während die Regenerierphase etwa dreißig bis fünfundvierzig Minuten beansprucht, dauern die einheitlichen Strömungsabschnitte etwa fünf bis dreißig Sekunden und die einheitlichen Stillstandsabschnitte etwa zehn bis fünfzig Sekunden. In Verbindung damit wird die Konzentration der Regeneriermittellösung beispielsweise bei HCl als Regeneriermittel von etwa fünf bis sieben Prozent auf etwa acht bis zwölf Prozent erhöht und bei NaOH als Regeneriermittel von etwa drei bis fünf Prozent auf etwa fünf bis sieben Prozent.

Das Austauschermaterial der bis zu einem Niveau erheblich oberhalb der Dränage 13 aufgeschütteten und von der Regenerierung ausgeschlossenen Zusatzschicht 23 unterscheidet sich zumindest anfänglich in nichts von dem restlichen Austauschermaterial der Ionenaustauschvorrichtung. Entsprechendes gilt auch für das Austauschermaterial der sich an die Zusatzschicht 23 anschließenden und mit dieser durch eine Mischeinrichtung vermischbar eingerichteten Zwischenschicht 24. Der annähernd einheitliche Korndurchmesser des Austauschermaterials liegt bei einem Wert zwischen 0,4 und 1,2 mm. Die Zusatzschicht 23 und die Zwischenschicht 24 enthalten etwa gleich viel Austauschermaterial, um die Ausbeutung der Regeneriermittellösung zu steigern und der Mischeinrichtung genügend Spielraum zu geben. Zur Kleinhaltung ihres Platzbedarfs im Tank 10 enthält die Zusatzschicht 23 weniger als ein Viertel des gesamten Austauschermaterials. Auf jeden Fall ist die Zusatzschicht 23 aber mehr als 10 cm hoch, damit sie die an sie geknüpften Erwartungen sicher erfüllen kann.

Als Bestandteil der Mischeinrichtung sind an der unteren Grenze der Zwischenschicht 24 angeordnete Rückspüldüsen 25 vorgesehen. Auf diese Weise wird die Mischeinrichtung besonders einfach und betriebssicher gestaltet, das Rückspülen auf das obere Austauschermaterial beschränkt und das Mischen mit dem Rückspülen vereint. Dadurch, daß die Rückspüldüsen 25 auf mehrere über die Dränage 13 und von der Dränage 13 nach unten abstehende Abstandshalter 26 versorgte Düsenköpfe 27 verteilt sind, erhält die Dränage 13 eine Doppelfunktion, erübrigt sich am Tank 10 ein ergänzender Flüssigkeitsanschluß und wird der im Austauschermaterial störende Fremdkörpereinfluß der Mischeinrichtung klein gehalten.

Um hierbei eine Beeinträchtigung des Regenerierbetriebes und des Rückspülbetriebes auszuschließen, enthält jeder Abstandshalter 26 ein Umschaltventil 28, das einen oberen Düsenkopf 29 der Dränage schließt, wenn der untere Düsenkopf 27 der Mischeinrichtung öffnet, und den Düsenkopf 27 der Mischeinrichtung schließt, wenn der Düsenkopf 29 der Dränage öffnet. Zur Anpassung an die unterschiedlichen Strömungsgeschwindigkeiten weist das Umschaltventil 28 eine vergleichsweise kleine Durchflußöffnung für den Düsenkopf 29 der Dränage und eine vergleichsweise große Durchflußöffnung für den Düsenkopf 27 der Mischeinrichtung auf.

Die Dränage 13 besteht aus mehreren zueinander parallelen Rohren, die außerhalb des Tanks 10 zusammengefaßt sind. Die für eine solche Dränage 13 sonst üblichen Dränagedüsen 30 sind von den Rohren in die von den Rohren getragenen Düsenköpfe 29 verlegt. Ebenso wie die Düsen des Düsenbodens 11 und die Düsen des Düsenzwischenbodens 15 sind die radial nach innen weisenden Dränagedüsen 30 der über die Querschnittsfläche des Tanks 10 verteilten Düsenköpfe 29 und die radial nach außen weisenden Rückspüldüsen 25 der entsprechend verteilten Düsenköpfe 27 so gestaltet, daß das körnige Austauschermaterial nicht in sie eindringen kann.

Vor dem oberen Flüssigkeitsanschluß 14 des Tanks 10 sind ein Einlaßventil 31 für die in der Beladephase der Ionenaustauschvorrichtung zu behandelnde Flüssigkeit und ein Auslaßventil 32 für die zum Mischen der Zusatzschicht 23 und der Zwischenschicht 24 verwendete Rückspülflüssigkeit vorgesehen, vor dem unteren Flüssigkeitsanschluß 12 des Tanks 10 ein Einlaßventil 20 für die Regeneriermittellösung und ein Auslaßventil 33 für die in der Beladephase der Ionenaustauschvorrichtung behandelte Flüssigkeit und vor der Dränage 13 ein Einlaßventil 34 für die Rückspülflüssigkeit und ein Auslaßventil 35 für die verbrauchte Regeneriermittellösung. In jedem dieser drei Ventilpaare kann ein Ventil erst dann geöffnet werden, wenn das andere Ventil des Ventilpaares geschlossen ist und außerdem die Nichtpartner in den beiden anderen Ventilpaaren geschlossen sind.

## Patentansprüche

1. Ionenaustauschvorrichtung, bei der in einem aufgerichteten länglichen Tank (10) auf einem über einem unteren Flüssigkeitsanschluß (12) befindlichen Düsenboden (11) körniges Austauschermaterial bis zu einem Niveau oberhalb einer horizontalen Dränage (13) für die Regeneriermittellösung (17) einer Aufwärtsgegenstromregenerierung und erheblich unterhalb eines oberen Flüssigkeitsanschlusses (14) aufgeschüttet ist und an einer Pumpe (18) oder einem Ventil (20) in der Zuleitung (19) für die Regeneriermittellösung (17) eine Schaltautomatik (16) zum alternativen Zuleiten oder Nichtzuleiten der Regeneriermittellösung (17) mit einem die Regenerierphase in Strömungsabschnitte und Stillstandsabschnitte unterteilenden Taktgeber (22) vorgesehen ist, dadurch gekennzeichnet, daß oberhalb der Dränage (13) eine von der Regenerierung ausgeschlossene mehr als 10 cm hohe Zusatzschicht (23) an Austauschermaterial, die weniger als ein Viertel des gesamten Austauschermaterials enthält, aufgeschüttet ist und daß unterhalb der Dränage (13) eine sich an die Zusatzschicht (23) anschließende und mit dieser durch eine Mischeinrichtung, die an der unteren Grenze der Zwischenschicht (24) angeordnete Rückspüldüsen (25) aufweist, vermischbar eingerichtete Zwischenschicht (24), die etwa gleich viel Austauschermaterial wie die Zusatzschicht (23) enthält, gebildet ist.

2. Ionenaustauschvorrichtung nach Anspruch 1, dadurch gekennzeichnet, daß die Rückspüldüsen (25) auf mehrere über die Dränage (13) und von der Dränage (13) nach unten abstehende Abstandshalter (26) versorgte Düsenköpfe (27) verteilt sind.

3. Ionenaustauschvorrichtung nach Anspruch 2, dadurch gekennzeichnet, daß jeder Abstandshalter (26) ein Umschaltventil (28) enthält, das einen oberen Düsenkopf (29) der Dränage schließt, wenn der untere Düsenkopf (27) der Mischeinrichtung öffnet, und den Düsenkopf (27) der Mischeinrichtung schließt, wenn der Düsenkopf (29) der Dränage öffnet.

4. Ionenaustauschvorrichtung nach Anspruch 3, dadurch gekennzeichnet, daß das Umschaltventil (28) eine vergleichsweise kleine Durchflußöffnung für den Düsenkopf (29) der Dränage und eine vergleichsweise große Durchflußöffnung für den Düsenkopf (27) der Mischeinrichtung aufweist.

## Claims

1. Ion exchange apparatus in which granular exchanger material in an upright elongate tank (10) above a nozzle tray (11) which is located over a lower liquid connection (12) is filled up to a level above a horizontal drainage system (13) for the regenerant solution (17) of an upward countercurrent regeneration and substantially below an upper liquid connection (14), and an automatic switching mechanism (16) for alternatively supplying or not supplying the regenerant solution (17), having a pulse generator (22) dividing the regeneration phase into flow sections and standstill sections, is provided at a pump (18) or a valve (20) in the supply line (19) for the regenerant solution (17), characterized in that an additional layer (23) of exchanger material, excluded from regeneration and more than 10 cm high and containing less than a quarter of the total exchanger material, is filled to above the drainage system (13), and in that formed below the drainage system (13) is an intermediate layer (24), which adjoins the additional layer (23) and is mixable therewith by a mixing apparatus which has reversible flow nozzles (25) arranged at the lower border of the intermediate layer (24), this layer (24) containing approximately the same amount of exchanger material as the additional layer (23).

2. Ion exchange apparatus according to Claim 1, characterized in that the reversible flow nozzles (25) are distributed over a plurality of nozzle heads (27) supplied via the drainage system (13) and spacers (26) projecting downwards from the drainage system (13).

3. Ion exchange apparatus according to Claim 2, characterized in that each spacer (26) contains a changeover valve (28) which closes an upper nozzle head (29) of the drainage system when the lower nozzle head (27) of the mixing apparatus opens and closes the nozzle head (27) of the mixing apparatus when the nozzle head (29) of the drainage system opens.

4. Ion exchange apparatus according to Claim 3, characterized in that the changeover valve (28) has a comparatively small throughflow opening for the nozzle head (29) of the drainage system and a comparatively large throughflow opening for the nozzle head (27) of the mixing apparatus.

Revendications

1. Appareillage d'échange d'ions dans lequel, dans une cuve (10) oblongue et verticale et sur un plateau à buses (11) se trouvant au-dessus d'un raccord inférieur pour du liquide (12), de la matière d'échange en grains est chargée jusqu'à un niveau au-dessus d'une évacuation horizontale (13), destinée à la solution d'agent de régénération (17) d'une régénération ascendante à contre-courant, et considérablement en-dessous d'un raccord supérieur pour du liquide (14), et, sur une pompe (18) ou sur une vanne (20) du conduit d'amenée (19) de la solution d'agent de régénération (17), est prévu un inverseur automatique (16) destiné à amener alternativement de la solution d'agent de régénération ou à ne pas en amener et comportant une horloge (22) subdivisant la phase de régénération en des durées d'écoulement et en des durées d'arrêt, caractérisé en ce qu'au-dessus de l'évacuation (13) est chargée une couche supplémentaire (23) de matière d'échange, de plus de 10 cm de hauteur, qui est exclue de la régénération et qui contient moins du quart de toute la matière d'échange et en ce qu'en-dessous de l'évacuation (13) est formée une couche intermédiaire (24) qui fait suite à la couche supplémentaire (23), qui peut être mélangée à celle-ci par un dispositif de mélange, comportant des buses de lavage en retour (25) et disposé à la limite inférieure de la couche intermédiaire (24), et qui contient à peu près autant de matière d'échange que la couche supplémentaire (23).

2. Appareillage d'échange d'ions suivant la revendication 1, caractérisé en ce que les buses de lavage en retour (25) sont réparties sur plusieurs têtes de buses (27) alimentées par l'évacuation (13) et par des entretoises (26) faisant saillie vers le bas à partir de l'évacuation (13).

3. Appareillage d'échange d'ions suivant la revendication 2, caractérisé en ce que chaque entretoise (26) comporte une vanne inverseuse (28) qui ferme une tête de buses supérieure (29) de l'évacuation si la tête de buses inférieure (27) du dispositif de mélange est ouverte, et qui ferme la tête de buses (27) du dispositif de mélange si la tête de buse (29) de l'évacuation est ouverte.

4. Appareillage d'échange d'ions suivant la revendication 3, caractérisé en ce que la vanne inverseuse (28) a un orifice de passage relativement petit pour la tête de buses (29) de l'évacuation et un orifice de passage relativement grand pour la tête de buses (27) du dispositif de mélange.

EP 0 212 222 B1

FIG. 1

FIG. 2